# EUROPÄISCHE PATENTSCHRIFT

(11) **EP 4 635 137 B1**
(45) Veröffentlichungstag und Bekanntmachung des Hinweises auf die Patenterteilung: **19.08.2026**
(21) Anmeldenummer: 23804933.2
(22) Anmeldetag: 25.10.2023
(51) Int. Cl.: H04L 12/40

(54) **SENDE-EMPFANGSEINRICHTUNG FÜR EINE TEILNEHMERSTATION EINES SERIELLEN BUSSYSTEMS UND VERFAHREN ZUM EMPFANGEN VON DIFFERENTIELLEN SIGNALEN IN EINEM SERIELLEN BUSSYSTEM**
TRANSCEIVER DEVICE FOR A SUBSCRIBER STATION OF A SERIAL BUS SYSTEM AND METHOD FOR RECEIVING DIFFERENTIAL SIGNALS IN A SERIAL BUS SYSTEM
DISPOSITIF ÉMETTEUR-RÉCEPTEUR POUR UNE STATION D'ABONNÉ D'UN SYSTÈME DE BUS SÉRIE ET PROCÉDÉ DE RÉCEPTION DE SIGNAUX DIFFÉRENTIELS DANS UN SYSTÈME DE BUS SÉRIE

(30) Priorität: 13.12.2022 DE 102022213573
(43) Veröffentlichungstag der Anmeldung: 22.10.2025
(73) Patentinhaber: Robert Bosch GmbH, 70442 Stuttgart (DE)
(72) Erfinder: WALKER, Steffen, 72770 Reutlingen (DE); FREY, Martin, 83101 Rohrdorf (DE)
(86) Internationale Anmeldenummer: PCT/EP2023/079759
(87) Internationale Veröffentlichungsnummer: WO 2024/125870

(56) Entgegenhaltungen:
- US-A1- 2005 141 565
- US-A1- 2019 154 439
- US-A1- 2020 018 818

## Beschreibung

Die vorliegende Erfindung betrifft ein Sende-Empfangseinrichtung für eine Teilnehmerstation eines seriellen Bussystems und ein Verfahren zum Empfangen von differentiellen Signalen in einem seriellen Bussystem, die bei einer Sende-/Empfangseinrichtung (Transceiver) verwendbar sind.

### Stand der Technik

Serielle Bussysteme werden zur Nachrichten- oder Datenübertragung in technischen Anlagen verwendet. Beispielsweise kann ein serielles Bussystem eine Kommunikation zwischen Sensoren und Steuergeräten in einem Fahrzeug oder einer technischen Produktionsanlage, usw. ermöglichen.

Bei einem CAN-Bussystem werden Nachrichten mittels des CAN- und/oder CAN FD Protokolls übertragen, wie es im Standard ISO-11898-1:2015 als CAN Protokoll-Spezifikation mit CAN FD beschrieben ist. Bei CAN FD wird bei der Übertragung auf dem Bus zwischen einer langsamen Betriebsart in einer ersten Kommunikationsphase (Arbitrationsphase) und einer schnellen Betriebsart in einer zweiten Kommunikationsphase (Datenphase) hin und her geschaltet. Bei einem CAN FD-Bussystem ist eine Datenübertragungsrate von größer 1 MBit pro Sekunde (1Mbps) in der zweiten Kommunikationsphase möglich. CAN FD wird von den meisten Herstellern im ersten Schritt mit 500kbit/s Arbitrationsbitrate und 2Mbit/s Datenbitrate im Fahrzeug eingesetzt.

Um noch größere Datenraten in der zweiten Kommunikationsphase zu ermöglichen, gibt es Nachfolgebussysteme für CAN FD, wie beispielsweise CAN- SIC und CAN XL. Bei CAN- SIC gemäß dem Standard CiA601-4 kann in der zweiten Kommunikationsphase eine Datenrate von etwa 5 bis 8 Mbit/s erreicht werden. Bei CAN XL ist eine Datenrate in der zweiten Kommunikationsphase von > 10 Mbit/s gefordert. Für CAN XL ist derzeit ein Standard CiA610-3 von der Organisation CAN in Automation (CiA) definiert.

Bei allen oben genannten CAN basierten Bussystemen wird für ein Sendesignal TxD separat ein Bussignal CAN_H und idealerweise gleichzeitig ein Bussignal CAN_L auf einen Bus getrieben. Hierbei wird zumindest in der ersten Kommunikationsphase in den Bussignalen CAN_H, CAN_L ein Buszustand aktiv getrieben. Der andere Buszustand wird nicht getrieben und stellt sich aufgrund eines Abschlusswiderstands für Busleitungen bzw. Busadern des Busses ein.

Zum Senden und Empfangen der Bussignale werden in einem CAN-Bussystem für die einzelnen Kommunikationsteilnehmer üblicherweise Sende-/Empfangseinrichtungen eingesetzt, die auch als CAN-Transceiver oder CAN FD Transceiver usw. bezeichnet werden. Bei CAN XL müssen die Sende-/Empfangseinrichtungen in der Lage sein, die Bussignale CAN_H, CAN_L in der zweiten Kommunikationsphase mit einem anderen Physical Layer auf den Bus zu senden und mit einer anderen Empfangsschwelle zu empfangen als in der ersten Kommunikationsphase. Der Physical Layer entspricht der Bitübertragungsschicht oder Schicht 1 des bekannten OSI-Modells (Open Systems Interconnection Modell). Der Physical Layer einer CAN-XL-Sende-/Empfangseinrichtung ist derzeit im Standard CiA610-3 definiert.

Damit können die Daten in der zweiten Kommunikationsphase mit einer deutlich höheren Datenrate auf den Bus gesendet werden als in der ersten Kommunikationsphase. Zudem können sich damit die Buspegel der Bussignale CAN_H, CAN_L für die erste Kommunikationsphase von den Buspegeln der zweiten Kommunikationsphase unterscheiden. Für eine geringe Fehlerrate ist es dabei wichtig, dass eine Teilnehmerstation, die in die Kommunikation am Bus neu hinzugeschaltet wird, erkennt, in welcher Kommunikationsphase derzeit am Bus kommuniziert wird.

Für alle Betriebsphasen der Kommunikation am Bus ist also sicherzustellen, dass eine empfangende Teilnehmerstation des Bussystems die Pegel der Bussignale CAN_H, CAN_L richtig erkennen und auswerten kann.

Die US 2005/0141565 A1 betrifft einen von einer Anzahl von Knoten eines Kommunikationssystems. Die Knoten sind mit einem Kommunikationsmedium zur Übertragung von Daten zwischen den Knoten verbunden. Der genannte eine Knoten umfasst einen Kommunikationscontroller, über den der Knoten mit dem Kommunikationsmedium verbunden ist, und einen Buswächter zur Steuerung des Zugriffs des Kommunikationscontrollers auf das Kommunikationsmedium. Um eine günstige, aber dennoch zuverlässige Möglichkeit zur Überwachung des synchronisierten Taktsignals eines Knotens eines Kommunikationssystems und insbesondere zur Erkennung von Abweichungen des synchronisierten Taktsignals bereitzustellen, wird vorgeschlagen, dass ein synchronisiertes Taktsignal vom Kommunikationscontroller dem Buswächter zur Verfügung gestellt wird und dass der Buswächter Mittel zur Überwachung des synchronisierten Taktsignals unter Verwendung eines buswächterinternen Taktsignals umfasst, das mittels einer elektronischen Schaltung erzeugt wird und das weniger genau ist als das zu überwachende synchronisierte Taktsignal.

### Offenbarung der Erfindung

Daher ist es Aufgabe der vorliegenden Erfindung, eine Sende-Empfangseinrichtung für eine Teilnehmerstation eines seriellen Bussystems und ein Verfahren zum Empfangen von differentiellen Signalen in einem seriellen Bussystem bereitzustellen, welche die zuvor genannten Probleme lösen. Insbesondere sollen die Sende-Empfangseinrichtung und das Verfahren eine zuverlässige und unaufwändige Erkennung von Bussignalen ermöglichen, auch wenn die Sende-Empfangseinrichtung nicht der Sender der derzeit am Bus übertragenen Nachricht ist und der Physical Layer zwischen zwei Kommunikationsphasen bei der Kommunikation am Bus umgeschaltet wird.

Die Aufgabe wird durch eine Sende-Empfangseinrichtung für eine Teilnehmerstation eines seriellen Bussystems mit den Merkmalen von Anspruch 1 gelöst. Bei dem Bussystem sind differentielle Signale auf einem Bus des Bussystems in einer ersten Kommunikationsphase einer Kommunikation auf dem Bus mit einem ersten Physical Layer erzeugt und in einer zweiten Kommunikationsphase der Kommunikation auf dem Bus mit einem zweiten Physical Layer erzeugt. Die Sende-Empfangseinrichtung hat einen ersten Komparator zur Auswertung der von dem Bus empfangenen differentiellen Signalen mit einer ersten Empfangsschwelle in der ersten Kommunikationsphase und zur Auswertung der von dem Bus empfangenen differentiellen Signale mit einer dritten Empfangsschwelle in der zweiten Kommunikationsphase, wobei der erste Komparator zur Ausgabe eines Ausgangssignals ausgestaltet ist, um ein digitales Empfangssignal an eine Kommunikationssteuereinrichtung der Teilnehmerstation auszugeben, einen zweiten Komparator zur Auswertung der von dem Bus empfangenen differentiellen Signale mit einer zweiten Empfangsschwelle in der ersten Kommunikationsphase für den Empfangssignaltreiber, und einen Maskierblock zur Erzeugung eines maskierten Komparatorsignals, das ein zeitweise maskiertes Ausgangssignal des zweiten Komparators ist, und zur Erzeugung eines Ausgangssignals aus dem maskierten Komparatorsignal und dem Ausgangssignal des ersten Komparators für den Empfangssignaltreiber.

Die beschriebene Sende-Empfangseinrichtung ist derart ausgestaltet, dass eine zuverlässige und unaufwändige Erkennung von Bussignalen im Betrieb des Bussystems erfolgt. Dies gilt insbesondere auch für eine derartige Kommunikation, bei welcher die Sende-Empfangseinrichtung nicht der Sender der derzeit am Bus übertragenen Nachricht ist und der Physical Layer zwischen zwei Kommunikationsphasen für die Kommunikation am Bus umgeschaltet wird. Die Sende-Empfangseinrichtung kann die jeweiligen Buszustände der einzelnen Kommunikationsphasen und somit die einzelnen Kommunikationsphasen bei der Kommunikation am Bus sicher unterscheiden.

Dabei ermöglicht die beschriebene Sende-Empfangseinrichtung, dass die Vorgaben für die Kommunikation gemäß den Anforderungen von CAN XL erfüllt werden, die insbesondere in dem Standard CiA610-3 festgeschrieben sind. Jedoch benötigt die Sende-Empfangseinrichtung hierfür als zweiten Empfangskomparator einen vergleichsweise kostengünstigen Empfangskomparator, auch wenn Signale mit einer Bitzeit von ca. 50 ns vom Bus zu empfangen sind, was einer Übertragungsrate am Bus von ca. 20 Mbit/s entspricht. Grund dafür ist, dass der Komparator nicht die sehr hohe Bandbreite benötigt, die zum Empfangen von Signalen mit einer Bitzeit von ca. 50 ns oder kürzer erforderlich ist.

Zudem ist die beschriebene Sende-Empfangseinrichtung derart ausgestaltet, dass die Signalpegel der Bussignale mit simultanem Auswerten von zwei Empfangsschwellen in ein digitales Empfangssignal umgewandelt werden können. Dabei können die beiden Empfangsschwellen, welche in den einzelnen Kommunikationsphasen verwendet werden, je Kommunikationsphase unterschiedlich sein.

Dadurch stellt die Sende-Empfangseinrichtung sicher, dass ihre übergeordnete Teilnehmerstation, die beispielsweise neu oder nach einem Fehler hinzugeschaltet wird und sich in die Kommunikation am Bus versucht zu integrieren, die Kommunikation am Bus nicht stört. Die Teilnehmerstation kann nämlich mit der Sende-Empfangseinrichtung sicher erkennen, ob der Bus frei von Datenverkehr ist. Da die Sende-Empfangseinrichtung zuverlässig die aktuellen Buszustände zuordnet, wird ihre neu in die Buskommunikation hinzugeschaltete Teilnehmerstation erst selbst Daten auf den Bus senden, wenn der Bus frei ist. Somit führt ein Hinzuschalten einer Teilnehmerstation, die beispielsweise initial gestartet wird oder versucht, sich nach einem Fehler in der Buskommunikation wieder in die Kommunikation am Bus zu integrieren, nicht zu einer Störung der Kommunikation am Bus.

Infolge dessen ermöglicht die Sende-Empfangseinrichtung die Funktionalität, für Arbitrationsphase und Datenphase unterschiedliche Empfangsschwellen zu verwenden. Dadurch wird nicht nur die Kommunikation im Bussystem mit höheren Bitraten realisiert, sondern auch die übertragbare Bitrate nicht durch Fehler in der Kommunikation herabgesetzt.

Vorteilhafte weitere Ausgestaltungen der Sende-Empfangseinrichtung sind in den abhängigen Ansprüchen beschrieben.

Der Maskierblock kann aufweisen ein Zeitglied, das an einen Ausgang des zweiten Komparators angeschlossen ist und zur Ausgabe des maskierten Komparatorsignals ausgestaltet ist, und eine Logikschaltung, die ausgestaltet ist, aus dem Ausgangssignal des ersten Komparators und dem maskierten Komparatorsignal ein Signal zur Ausgabe an den Empfangssignaltreiber zu erzeugen.

Optional ist die Logikschaltung ein UND-Gatter, um seriell eine logische UND-Verknüpfung des Ausgangssignals des ersten Komparators und des maskierten Komparatorsignals zu bilden.

Möglicherweise hat die Sende-/Empfangseinrichtung zudem einen Treiber zum Treiben eines digitalen Empfangssignals an eine Kommunikationssteuereinrichtung einer Teilnehmerstation des Bussystems, und eine Empfangssignal-Logikschaltung zum Weiterleiten eines Ausgangssignals von einer ersten Komparatorlinie, die den ersten Komparator aufweist, und eines Ausgangssignals von einer zweiten Komparatorlinie, die den zweiten Komparator aufweist, an den Treiber, wenn die Kommunikation in der ersten Kommunikationsphase stattfindet, und zum Weiterleiten nur des Ausgangssignals von der ersten Komparatorlinie an den Treiber, wenn die Kommunikation in der zweiten Kommunikationsphase stattfindet.

Die Sende-/Empfangseinrichtung hat möglicherweise zudem einen ersten Spannungsteiler, der an den Bus angeschlossen ist und der die von dem Bus empfangenen differentiellen Signale zu dem ersten Komparator ausgibt, und einen zweiten Spannungsteiler, der an den Bus angeschlossen ist und der die von dem Bus empfangenen differentiellen Signale zu dem zweiten Komparator ausgibt.

Der erste und zweite Spannungsteiler können jeweils eine Schaltung aus Widerständen aufweisen, an welchen der erste und zweite Komparator angeschlossen sind, wobei der erste und zweite Komparator die differentiellen Signale simultan auswerten.

Der erste Spannungsteiler kann einen Schalter aufweisen, der angeordnet ist, in einer ersten Schaltstellung die erste Empfangsschwelle für den ersten Spannungsteiler einzustellen und in einer zweiten Schaltstellung die dritte Empfangsschwelle für den ersten Spannungsteiler einzustellen, und wobei der zweite Spannungsteiler zur Einstellung der zweiten Empfangsschwelle ausgestaltet ist.

Die Schalteinheit kann angeordnet sein zum Hinzuschalten oder Wegschalten eines Widerstands zur Masse.

Optional ist die Schalteinheit ein NMOS-Transistor.

In einer speziellen Ausgestaltung ist, die Sende-/Empfangseinrichtung ausgestaltet, das Ausgangssignal des zweiten Komparators zu dem Empfangssignaltreiber auszugeben, wenn der Schalter in seiner ersten Schaltstellung die erste Empfangsschwelle in dem ersten Spannungsteiler eingestellt hat, wobei die Sende-/Empfangseinrichtung zudem ausgestaltet sein kann, das Ausgangssignal des zweiten Komparators nicht zu dem Empfangssignaltreiber auszugeben, wenn der Schalter in seiner zweiten Schaltstellung die dritte Empfangsschwelle in dem ersten Spannungsteiler eingestellt hat.

Denkbar ist, dass die Sende-/Empfangseinrichtung zudem eine Betriebsarteinstelleinheit hat zum Ansteuern des Schalters zum Umschalten des ersten Spannungsteilers zwischen der ersten und dritten Empfangsschwelle in Abhängigkeit davon, ob auf dem Bus die erste oder zweite Kommunikationsphase stattfindet.

Die Sende-/Empfangseinrichtung hat möglicherweise zudem ein Sendemodul zum Senden von Signalen auf einen Bus des Bussystems.

Die zuvor beschriebene Sende-/Empfangseinrichtung kann Teil einer Teilnehmerstation für ein serielles Bussystem sein. Die Teilnehmerstation kann zudem eine Kommunikationssteuereinrichtung zur Steuerung der Kommunikation in dem Bussystem und zur Erzeugung eines digitalen Sendesignals für das Sendemodul aufweisen.

Optional ist die Teilnehmerstation für die Kommunikation in einem Bussystem ausgestaltet, in dem zumindest zeitweise ein exklusiver, kollisionsfreier Zugriff einer Teilnehmerstation auf den Bus des Bussystems gewährleistet ist.

Die zuvor genannte Aufgabe wird zudem durch ein Verfahren zum Empfangen von differentiellen Signalen in einem seriellen Bussystem mit den Merkmalen von Anspruch 15 gelöst. Bei dem Bussystem werden differentielle Signale auf einem Bus des Bussystems in einer ersten Kommunikationsphase einer Kommunikation auf dem Bus mit einem ersten Physical Layer erzeugt und in einer zweiten Kommunikationsphase der Kommunikation auf dem Bus mit einem zweiten Physical Layer erzeugt werden. Das Verfahren weist die Schritte auf, Empfangen, mit einer Sende-Empfangseinrichtung, von differentiellen Signalen von dem Bus, Auswerten, mit einem ersten Komparator, der von dem Bus empfangenen differentiellen Signale mit einer ersten Empfangsschwelle in der ersten Kommunikationsphase, Auswerten, mit dem ersten Komparator, der von dem Bus empfangenen differentiellen Signale mit einer dritten Empfangsschwelle in der zweiten Kommunikationsphase, wobei der erste Komparator zur Ausgabe eines Ausgangssignals in der ersten und zweiten Kommunikationsphase ein digitales Empfangssignal an eine Kommunikationssteuereinrichtung der Teilnehmerstation ausgibt, und Auswerten, mit einem zweiten Komparator, der von dem Bus empfangenen differentiellen Signale mit einer zweiten Empfangsschwelle in der ersten Kommunikationsphase für den Empfangssignaltreiber, und Erzeugen, mit einem Maskierblock, eines maskierten Komparatorsignals, das ein zeitweise maskiertes Ausgangssignal des zweiten Komparators ist, und Erzeugen, mit dem Maskierblock, eines Ausgangssignals aus dem maskierten Komparatorsignal und dem Ausgangssignal des ersten Komparators für den Empfangssignaltreiber.

Das Verfahren bietet dieselben Vorteile, wie sie zuvor in Bezug auf die Sende-Empfangseinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein Beispiel für den idealen zeitlichen Verlauf von Bussignalen CAN_H, CAN_L in dem Bussystem von Fig. 1;
Fig. 4 den zeitlichen Verlauf einer Differenzspannung VDIFF, die sich auf dem Bus des Bussystems infolge der Bussignale von Fig. 4 ausbildet;
Fig. 5 ein vereinfachtes Blockschaltbild einer Sende-Empfangseinrichtung mit einem Empfangsmodul für eine Teilnehmerstation des Bussystems gemäß dem ersten Ausführungsbeispiel;
Fig. 6 ein Schaltbild eines Empfangsmoduls gemäß einem ersten Ausführungsbeispiel;
Fig. 7 den zeitlichen Verlauf einer Differenzspannung VDIFF, die sich auf dem Bus des Bussystems infolge der Sende-Empfangseinrichtung von Fig. 5 ausbildet;
Fig. 8 den zeitlichen Verlauf eines Empfangssignal, welches das Empfangsmodul von Fig. 6 aus dem von dem Bus empfangenen Signal von Fig. 7 ausbildet, wenn ein Zeitglied des Empfangsmoduls inaktiv ist;
Fig. 9 den zeitlichen Verlauf eines Empfangssignal, welches das Empfangsmodul von Fig. 6 aus dem von dem Bus empfangenen Signal von Fig. 7 ausbildet, wenn das Zeitglied des Empfangsmoduls aktiv ist;
Fig. 10 ein Beispiel für einen zeitlichen Verlauf eines digitalen Sendesignals, welches gemäß einem zweiten Ausführungsbeispiel in der Arbitrationsphase (SIC-Betriebsart) in Bussignale CAN_H, CAN_L für einen Bus des Bussystems von Fig. 1 umgesetzt werden soll;
Fig. 11 den zeitlichen Verlauf der Bussignale CAN_H, CAN_L beim Wechsel zwischen einem rezessiven Buszustand zu einem dominanten Buszustand und zurück zu dem rezessiven Buszustand, die in der Arbitrationsphase (SIC-Betriebsart) aufgrund des Sendesignals von Fig. 10 auf den Bus gesendet werden;
Fig. 12 ein Beispiel für einen zeitlichen Verlauf eines digitalen Sendesignals, welches gemäß dem zweiten Ausführungsbeispiel in der Datenphase in Bussignale CAN_H, CAN_L für den Bus des Bussystems von Fig. 1 umgesetzt werden soll; und
Fig. 13 den zeitlichen Verlauf der Bussignale CAN_H, CAN_L, die in der Datenphase aufgrund des Sendesignals von Fig. 12 auf den Bus gesendet werden.

In den Figuren sind gleiche oder funktionsgleiche Elemente, sofern nichts anderes angegeben ist, mit denselben Bezugszeichen versehen.

### Beschreibung der Ausführungsbeispiele

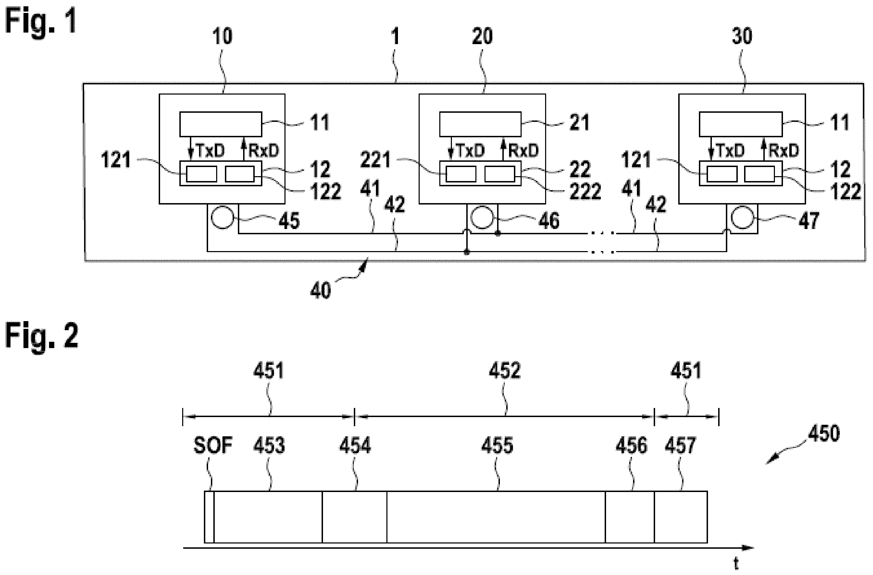

Fig. 1 zeigt ein Bussystem 1, das beispielsweise zumindest abschnittsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 oder Busleitung mit einer ersten Busader 41 und einer zweiten Busader 42 angeschlossen sind. Die Busadern 41, 42 können auch CAN_H und CAN_L für die Signale auf dem Bus 40 genannt werden. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11 und eine Sende-/Empfangseinrichtung 12. Die Sende-/Empfangseinrichtung 12 hat ein Sendemodul 121 und ein Empfangsmodul 122.

Die Teilnehmerstation 20 hat eine Kommunikationssteuereinrichtung 21 und eine Sende-/Empfangseinrichtung 22. Die Sende-/Empfangseinrichtung 22 hat ein Sendemodul 221 und ein Empfangsmodul 222.

Die Sende-/Empfangseinrichtungen 12 der Teilnehmerstationen 10, 30 und die Sende-/Empfangseinrichtung 22 der Teilnehmerstation 20 sind jeweils direkt an den Bus 40 angeschlossen, auch wenn dies in Fig. 1 nicht dargestellt ist.

Die Kommunikationssteuereinrichtungen 11, 21 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtungen 11 erstellen und lesen erste Nachrichten 45, 47, die beispielsweise modifizierte CAN Nachrichten 45, 47 sind. Hierbei sind die modifizierten CAN Nachrichten 45, 47 beispielsweise auf der Grundlage des CAN XL-Formats aufgebaut. Die Sende-/Empfangseinrichtung 12 dient zum Senden und Empfangen der Nachrichten 45, 47 von dem Bus 40. Das Sendemodul 121 empfängt ein von der Kommunikationssteuereinrichtung 11 für eine der Nachrichten 45, 47 erstelltes digitales Sendesignal TxD und setzt dieses in Signale auf den Bus 40 um. Das Empfangsmodul 121 empfängt auf dem Bus 40 gesendete Signale entsprechend den Nachrichten 45 bis 47 und erzeugt daraus ein digitales Empfangssignal RxD. Das Empfangsmodul 122 sendet das Empfangssignal RxD an die Kommunikationssteuereinrichtung 11.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller. Die Kommunikationssteuereinrichtung 21 erstellt und liest zweite Nachrichten 46, beispielsweise CAN FD-Nachrichten 46. Die Sende-/Empfangseinrichtung 22 dient zum Senden und Empfangen der Nachrichten 46 von dem Bus 40. Das Sendemodul 221 empfängt ein von der Kommunikationssteuereinrichtung 21 erstelltes digitales Sendesignal TxD und setzt dieses in Signale für eine Nachricht 46 auf den Bus 40 um. Das Empfangsmodul 221 empfängt auf dem Bus 40 gesendete Signale entsprechend den Nachrichten 45 bis 47 und erzeugt daraus ein digitales Empfangssignal RxD. Ansonsten kann die Sende-/Empfangseinrichtung 22 wie ein herkömmlicher CAN-Transceiver ausgeführt sein.

Zum Senden der Nachrichten 45, 47 mit CAN SIC oder CAN XL werden bewährte Eigenschaften übernommen, die für die Robustheit und Anwenderfreundlichkeit von CAN und CAN FD verantwortlich sind, insbesondere Rahmenstruktur mit Identifier und Arbitrierung nach dem bekannten CSMA/CR-Verfahren. Das CSMA/CR-Verfahren hat zur Folge, dass es sogenannte rezessive Zustände auf dem Bus 40 geben muss, welche von anderen Teilnehmerstationen 10, 20, 30 mit dominanten Pegeln oder dominanten Zuständen auf dem Bus 40 überschrieben werden können.

Mit den beiden Teilnehmerstationen 10, 30 ist eine Bildung und dann Übertragung von Nachrichten 45 mit verschiedenen CAN-Formaten, insbesondere dem CAN FD Format oder dem CAN SIC Format oder dem CAN XL Format, sowie der Empfang solcher Nachrichten 45 realisierbar, wie nachfolgend genauer beschrieben.

Fig. 2 zeigt für die Nachricht 45 einen Rahmen 450, der insbesondere ein CAN XL Rahmen ist, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD. Alternativ ist der Rahmen 450 kompatibel zu CAN SIC.

Gemäß Fig. 2 ist der Rahmen 450 für die CAN-Kommunikation auf dem Bus 40 in unterschiedliche Kommunikationsphasen 451, 452 unterteilt, nämlich eine Arbitrationsphase 451 (erste Kommunikationsphase) und eine Datenphase 452 (zweite Kommunikationsphase). Der Rahmen 450 hat, nach einem Startbit SOF, ein Arbitrationsfeld 453, ein Steuerfeld 454, in dem von der Arbitrationsphase 451 in die Datenphase 452 umgeschaltet wird, ein Datenfeld 455, ein Prüfsummenfeld 456 und ein Rahmenabschlussfeld 457.

In der Arbitrationsphase 451 wird mit Hilfe eines Identifizierers (ID) mit beispielsweise Bits ID28 bis ID18 in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Pegeln oder dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-XL-Rahmens 450 bzw. der Nachricht 45 aus dem Datenfeld 455 sowie das Prüfsummenfeld 456 gesendet. In dem Prüfsummenfeld 456 kann eine Prüfsumme über die Daten der Datenphase 452 einschließlich der Stuffbits enthalten sein, die vom Sender der Nachricht 45 nach jeweils einer vorbestimmten Anzahl von gleichen Bits, insbesondere 10 gleichen Bits, als inverses Bit eingefügt werden. Am Ende der Datenphase 452 wird wieder in die Arbitrationsphase 451 zurückgeschaltet.

In einem Endefeld in der Rahmenabschlussphase 457 kann mindestens ein Acknowledge-Bit enthalten sein. Außerdem kann eine Folge von 11 gleichen Bits vorhanden sein, welche das Ende des CAN XL-Rahmens 450 anzeigen. Mit dem mindestens einen Acknowledge-Bit kann mitgeteilt werden, ob ein Empfänger in dem empfangenen CAN XL-Rahmen 450 bzw. der Nachricht 45 einen Fehler entdeckt hat oder nicht.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Somit verwenden die Teilnehmerstationen 10, 30 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Jedoch ist im Vergleich zu CAN oder CAN FD in der Datenphase 452 als zweiter Kommunikationsphase eine Steigerung der Netto-Datenübertragungsrate, insbesondere auf über 10 Megabit pro Sekunde möglich. Außerdem ist ein Anheben der Größe der Nutzdaten pro Rahmen, insbesondere auf etwa 2kbyte oder einen beliebigen anderen Wert möglich.

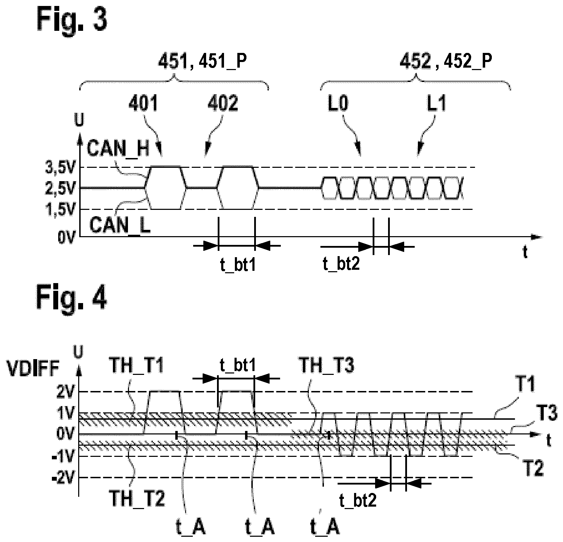

Fig. 3 zeigt auf der linken Seite, dass die Teilnehmerstationen 10, 20, 30 in der Arbitrationsphase 451 mit einem ersten Physical Layer 451_P jeweils Signale CAN_H, CAN_L über der Zeit t auf den Bus 40 senden, die eine erste Bitdauer t_bt1 haben. Die Signale CAN_H, CAN_L sind serielle Signale und haben abwechselnd mindestens einen dominanten Zustand 401, bei dem für VCAN_H = 3,5 V und für VCAN_L = 1,5 V gilt, oder mindestens einen rezessiven Zustand 402, bei dem VCAN_H = VCAN_L = 2,5 gilt. Dominante Zustände 401 werden bei einer NRZ-Codierung des Sendesignals TxD in der Phase 451 getrieben, wenn für TxD = 0 bzw. L (LOW) gilt. Rezessive Zustände 402 werden erzeugt, bzw. stellen sich bei einer NRZ-Codierung des Sendesignals TxD in der Phase 451 ein, wenn TxD = 1 bzw. H (HIGH) gilt. Nach der Arbitration in der Arbitrationsphase 451 steht eine der Teilnehmerstationen 10, 20, 30 als Gewinner fest.

Erkennen die Teilnehmerstationen 10, 20, 30 eine Signalisierung in dem Steuerfeld 454 von Fig. 3 für die Umschaltung von der ersten in die zweiten Kommunikationsphase 451, 452, schalten die jeweiligen Sende-/Empfangseinrichtung 12 ihren Physical Layer 451_P am Ende der Arbitrationsphase 451 von einer ersten Betriebsart (SLOW), die auch als SIC-Betriebsart ausgeführt sein kann, in den Physical Layer 452_P der Datenphase 452 um, wie rechts in Fig. 3 gezeigt. Hierfür werden die Betriebsarten der Datenphase 452 eingeschaltet, wie folgt.

Angenommen, die Teilnehmerstation 10 hat die Arbitration gewonnen. Dann schaltet die Sende-/Empfangseinrichtung 12 der Teilnehmerstation 10 ihren Physical Layer 451_P am Ende der Arbitrationsphase 451 von einer ersten Betriebsart (SLOW) in den Physical Layer 452_P für eine zweite Betriebsart (FAST_TX) um, da die Teilnehmerstation 10 in der Datenphase 452 Sender der Nachricht 45 ist. Das Sendemodul 121 erzeugt dann in der Datenphase 452 bzw. in der zweiten Betriebsart (FAST_TX) abhängig von einem Sendesignal TxD nacheinander und somit seriell die Zustände L0 oder L1 für die Signale CAN_H, CAN_L auf dem Bus 40. Der Zustand L0 (VCAN_H = 3,0 V, VCAN_L = 2,0 V) wird bei einer Pulsweiten-Modulation (PWM-Codierung) des Sendesignals TxD für ein erstes PWM-Symbol in dem Sendesignal TxD getrieben. Der Zustand L1 (VCAN_H = 2,0 V und VCAN_L = 3,0 V) wird bei der Pulsweiten-Modulation (PWM-Codierung) des Sendesignals TxD für ein zweites PWM-Symbol, das sich von dem ersten PWM-Symbol unterscheidet, in dem Sendesignal TxD getrieben.

Die Frequenz der Signale CAN_H, CAN_L kann in der Datenphase 452 gesteigert sein, wie auf der rechten Seite in Fig. 3 gezeigt. Bei dem Beispiel von Fig. 3 ist hierfür die Bitzeit oder Bitdauer t_bt2 in der Datenphase 452 kürzer bzw. geringer als die Bitzeit oder Bitdauer t_bt1 in der Arbitrationsphase 451. Somit ist die Netto-Datenübertragungsrate in der Datenphase 452 bei dem Beispiel von Fig. 3 im Vergleich zu der Arbitrationsphase 451 gesteigert.

Dagegen schaltet die Sende-/Empfangseinrichtung 12 der Teilnehmerstation 30 ihren Physical Layer 451_P am Ende der Arbitrationsphase 451 von der ersten Betriebsart (SLOW) in den Physical Layer 452_P für eine dritte Betriebsart (FAST_RX) um, da die Teilnehmerstation 30 in der Datenphase 452 nur Empfänger, also kein Sender, des Rahmens 450 ist. Nach dem Ende der Datenphase 452 schalten alle Sende-/Empfangseinrichtungen 12 der Teilnehmerstationen 10, 30 ihre Betriebsart in die erste Betriebsart (SLOW) um. Somit schalten alle Sende-/Empfangseinrichtungen 12 auch ihren Physical Layer um.

Gemäß Fig. 4 bildet sich in der Arbitrationsphase 451 im idealen Fall auf dem Bus 40 ein Differenzsignal VDIFF = CAN_H - CAN_L mit Werten von VDIFF = 2V für dominante Zustände 401 und VDIFF = 0V für rezessive Zustände 402. Dies ist auf der linken Seite in Fig. 4 gezeigt. Dagegen bildet sich in der Datenphase 452 auf dem Bus 40 ein Differenzsignal VDIFF = CAN_H - CAN_L mit Zuständen L0, L1 aus, wie auf der rechten Seite in Fig. 4 gezeigt. Der Zustand L0 hat einen Wert VDIFF = 1V. Der Zustand L1 hat einen Wert VDIFF = -1V.

Das Empfangsmodul 122 kann die Zustände 401, 402 jeweils mit zwei der Empfangsschwellen T1, T2, T3 unterscheiden, die in den Bereichen TH_T1, TH_T2, TH_T3 liegen. Hierfür tastet das Empfangsmodul 122 die Signale von Fig. 3 oder Fig. 4 zu Zeitpunkten t_A ab. Zum Auswerten des Abtastergebnisses verwendet das Empfangsmodul 122 in der Arbitrationsphase 451 die Empfangsschwelle T1 von beispielsweise 0,7 V und die Empfangsschwelle T2 von beispielsweise -0,35 V. Dagegen verwendet das Empfangsmodul 122 in der Datenphase 452 nur Signale, die mit der Empfangsschwelle T3 ausgewertet wurden. Bei der Umschaltung zwischen der ersten bis dritten Betriebsart (SLOW, FAST_TX, FAST_RX), die zuvor in Bezug auf Fig. 3 beschrieben sind, schaltet das Empfangsmodul 122 jeweils die Empfangsschwellen T2, T3 um, wie nachfolgend beschrieben.

Die Empfangsschwelle T2 dient zum Erkennen, ob der Bus 40 frei ist, wenn die Teilnehmerstation 12 neu in die Kommunikation am Bus 40 hinzugeschaltet wird und versucht, sich in die Kommunikation am Bus 40 zu integrieren. Die Empfangsschwelle T2 wird im Standard für CAN kurz OOB (= Out-of-Boundary = außerhalb des Grenzwerts) genannt. Die Bedingungen für einen verkehrsfreien CAN-XL-Bus sind, dass kein dominanter Zustand 401 auftritt, welcher typischerweise die Differenzspannung VDIFF = 2V hat. Somit darf die Empfangsschwelle T1 von beispielsweise 0,7 V nicht überschritten werden. Außerdem dürfen keine Pegel gemäß dem Zustand L1 auftreten, welcher typischerweise die Differenzspannung VDIFF = 2V hat -1V hat. Somit darf die Empfangsschwelle T2 von beispielsweise -0,35 V nicht unterschritten werden.

Jede Teilnehmerstation 10, 30 schaltet die Betriebsart der Sende-/Empfangseinrichtung 12 in die Betriebsart der Arbitrationsphase 451, wenn die Teilnehmerstation 12 neu in die Kommunikation am Bus 40 hinzugeschaltet wird.

Das Hinzuschalten der Teilnehmerstation 10 kann zum einen erforderlich werden, wenn die Teilnehmerstation 10 initial gestartet wird und in die Kommunikation am Bus 40 integriert werden soll. Zum anderen kann das Hinzuschalten der Teilnehmerstation 10 erforderlich werden, wenn die Teilnehmerstation 10 versucht, sich nach einem Fehler in der Buskommunikation wieder in die Kommunikation am Bus 40 zu integrieren. Erst wenn erkannt wird, dass der Bus frei ist, darf die Teilnehmerstation 10 in den genannten Fällen selbst Daten, insbesondere Nachrichten 45, 47, auf den Bus 40 senden. Hierfür wird geprüft, ob kein Dominantpegel am Bus 40 vorkommt, also die Empfangsschwelle T1 nicht überschritten wird. Zudem wird geprüft, ob weder L0- noch L1-Pegel am Bus 40 vorkommen. Hierbei kann die Schwelle T1 je nach Transceiver-Sendepegel sowohl durch Pegel für Zustände 401 (dom) und den Zustand L0 überschritten werden. Daher wird die Schwelle T2 verwendet, welche eine Erfassung über Zustände L0 durchführt.

Die folgende Tabelle 1 zeigt die Werte, die für die einzelnen Empfangsschwellen am Bus 40 einstellbar sind. Dabei gibt VDIFF_min für die einzelnen Bereiche TH_T1, TH_T2, TH_T3 die untere Grenze an, welche minimal für die entsprechende Empfangsschwelle T1, T2, T3 in V eingestellt werden darf. VDIFF_typ gibt den Wert an, der typischerweise oder üblicherweise für die entsprechenden Empfangsschwelle T1, T2, T3 in V eingestellt wird. VDIFF_max gibt für die einzelnen Bereiche TH_T1, TH_T2, TH_T3 die obere Grenze an, welche maximal für die entsprechende Empfangsschwelle T1, T2, T3 in V eingestellt werden darf.

**Tabelle 1: Toleranzbereiche der Empfangsschwellen T1, T2, T3**

| Empfangsschwelle | VDIFF_min in V | VDIFF_typ in V | VDIFF_max in V | Toleranz in V |
|---|---|---|---|---|
| T1 | 0,5 | 0,7 | 0,9 | +/- 0,2 |
| T2 | -0,45 | -0,35 | -0,25 | +/- 0,1 |
| T3 | -0,1 | 0,0 | +0,1 | +/- 0,1 |

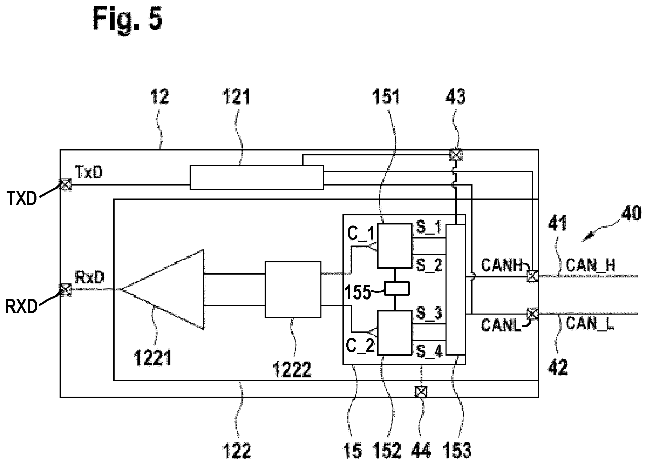

Fig. 5 zeigt den grundlegenden Aufbau der Sende-/Empfangseinrichtung 12 der Teilnehmerstation 10. Das Sendemodul 121 ist nur sehr vereinfacht dargestellt. Das Sendemodul 121 ist direkt an den Bus 40 angeschlossen, um das Sendesignal TxD der Kommunikationssteuereinrichtung 11 auf den Bus 40 senden zu können, um Signale gemäß Fig. 3 auf dem Bus 40 zu erzeugen.

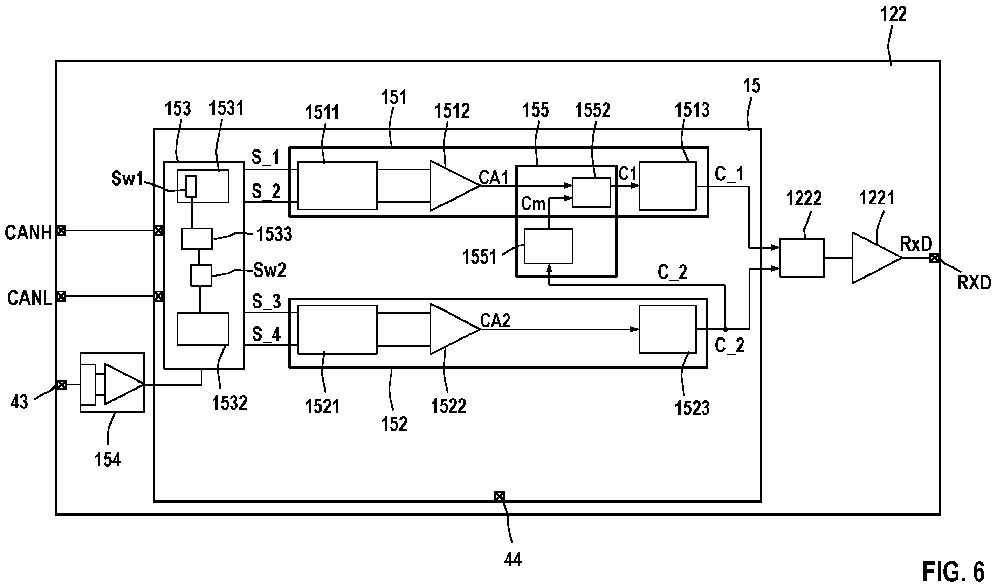

Das Empfangsmodul 122 hat einen Treiber 1221 für das digitale Empfangssignal RxD, eine Logikschaltung 1222 und eine Empfangsschaltung 15. Die Empfangsschaltung 15 hat eine erste Empfangskomparatorlinie 151, eine zweite Empfangskomparatorlinie 152, eine Empfangsstufe 153 und einen Maskierblock 155. Die Empfangskomparatoren 151, 152 sind jeweils Empfangskomparatorlinien mit einem Niederspannungs-Komparator. Dies ist in Bezug auf Fig. 6 noch genauer erläutert.

Gemäß Fig. 5 ist die Empfangsschaltung 15 zwischen den Bus 40 und die Logikschaltung 1222 geschaltet. Der Treiber 1221 ist an den Ausgang der Logikschaltung 1222 angeschlossen. Der Treiber 1221 treibt oder sendet das digitale Empfangssignal RxD zu der Kommunikationssteuereinrichtung 11.

Bei der Empfangsschaltung 15 ist die Empfangsstufe 153 an den Bus 40 angeschlossen. Im Betrieb des Bussystems 1 erzeugt die Empfangsstufe 153 aus den Signalen CAN_H, CAN_L Signale S_1, S_2 und gibt diese an die erste Empfangskomparatorlinie 151 weiter. Die erste Empfangskomparatorlinie 151 erzeugt aus den Signalen S_1, S_2 ein Komparatorausgangssignal C_1.

Außerdem erzeugt die Empfangsstufe 153 im Betrieb des Bussystems 1 aus den Signalen CAN_H, CAN_L zusätzlich noch Signale S_3, S_4 und gibt diese an die zweite Empfangskomparatorlinie 152 weiter. Die zweite Empfangskomparatorlinie 152 erzeugt aus den Signalen S_3, S_4 ein Komparatorausgangssignal C_2.

Die Logikschaltung 1222 ist ausgestaltet, je nach Betriebsart der Sende-/Empfangseinrichtung 12 das Signal C_1 und das Signal C_2 an den Treiber 1221 auszugeben oder nur das Signal C_2 an den Treiber 1221 auszugeben. Die Betriebsart der Sende-/Empfangseinrichtung 12, insbesondere ihres Empfangsmoduls 122, ist eine der ersten bis dritten Betriebsart (SLOW, FAST_TX, FAST_RX), wie zuvor beschrieben. Hierfür kann die Logikschaltung 1222 zumindest ein UND-Gatter aufweisen oder sein. Alternativ hat die Logikschaltung 1222 andere Logikbausteine, um die nachfolgend beschriebene Funktion des Empfangsmoduls 122 zu erfüllen.

Die Empfangsstufe 153, der Maskierblock 155 und deren Verschaltung mit der Logikschaltung 1222 sind anhand von Fig. 6 noch genauer beschrieben.

Wie in Fig. 6 gezeigt, hat die Empfangsschaltung 15 zudem eine Busvorspannungsquelle (Bus-Biasing) 154, welche eine Spannung CAN_SUPPLY/2 an die Empfangsstufe 153 liefert. Üblicherweise gilt CAN_SUPPLY = 5 V. In diesem Fall liefert die Busvorspannungsquelle 154 eine Spannung von 2,5 V an die Empfangsstufe 153.

Die erste Empfangskomparatorlinie 151 hat ein erstes Eingangsfilter 1511, einen ersten Komparator 1512, der ein digitales Ausgangssignal CA1 ausgibt, und ein erstes Ausgangsfilter 1513, der ein digitales Ausgangssignal C_1 ausgibt. Die zweite Empfangskomparatorlinie 152 hat ein zweites Eingangsfilter 1521, einen zweiten Komparator 1522, der ein digitales Ausgangssignal CA2 ausgibt, und ein zweites Ausgangsfilter 1523, der ein digitales Ausgangssignal C_2 ausgibt. Die Filter 1511, 1523, 1521, 1523 filtern jeweils Störungen aus den Signalen, die in das jeweilige Filter 1511, 1523, 1521, 1523 eingeben werden. Jeder der Empfangskomparatoren 1512, 1522 ist ein Niederspannungs-Komparator.

Der Maskierblock 155 ist zwischen die Empfangskomparatorlinien 151, 152 angeschlossen. Der Maskierblock 155 hat ein Zeitglied 1551, das ein digitales Signal CM ausgibt, und eine Logikschaltung 1552, der ein digitales Signal C1 ausgibt. Die Logikschaltung 1552 kann zumindest ein UND-Gatter aufweisen oder sein. Alternativ hat die Logikschaltung 1552 andere Logikbausteine, um die nachfolgend beschriebene Funktion des Empfangsmoduls 122 zu erfüllen.

Die Empfangsstufe 153 hat einen ersten Spannungsteiler 1531 mit einem ersten Schalter Sw1, einen zweiten Spannungsteiler 1532, eine Betriebsarteinstelleinheit 1533 und einen optionalen zweiten Schalter Sw2. Der erste und zweite Spannungsteiler 1531, 1532 werden jeweils mit derselben Spannung von der Busvorspannungsquelle 154 versorgt, insbesondere 2,5V für den Rezessivzustand 402 (Fig. 3). Der zweite Schalter Sw2 kann optional den zweiten Spannungsteiler 1532 abschalten.

Der erste Spannungsteiler 1531 und der zweite Spannungsteiler 1532 sind beispielsweise jeweils resistive Spannungsteiler oder Widerstandsspannungsteiler, die jeweils mehrere Widerstände aufweisen, die ein Widerstandsnetzwerk bilden. Der erste Spannungsteiler 1531 und der zweite Spannungsteiler 1532 haben jeweils einen Widerstand, der an Masse (CAN_GND) bzw. den Anschluss 44 angeschlossen ist, auch wenn dies in Fig. 6 nicht im Detail gezeigt ist.

Der erste Spannungsteiler 1531 kann beispielsweise die Empfangsschwelle T1 von Fig. 4 oder die Empfangsschwelle T3 von Fig. 4 einstellen. Die Ausgänge des ersten Spannungsteilers 1531 sind an die Eingänge des ersten Eingangsfilters 1511 angeschlossen. Für die Auswahl der Einstellung des ersten Spannungsteilers 1531 ist der Schalter Sw1 angeordnet, der durch die Betriebsarteinstelleinheit 1533 angesteuert wird. Ist der Schalter Sw1 entsprechend geschaltet, stellt der erste Spannungsteiler 1531 die Empfangsschwelle T1 von Fig. 4 ein, andernfalls stellt der erste Spannungsteiler 1531 die Empfangsschwelle T3 von Fig. 4 ein. Hierfür kann der Schalter Sw1 angeordnet sein, um beispielsweise einen Pfad zu einem Widerstand zur Masse (Anschluss 44) leitfähig schalten, um die Empfangsschwelle T1 von Fig. 4 einzustellen. Schaltet der Schalter Sw1 dann den Pfad zu dem Widerstand zur Masse (Anschluss 44) nicht leitfähig, wird die dritte Empfangsschwelle T3 von Fig. 4 eingestellt.

Die Ausgänge des zweiten Spannungsteilers 1532 sind an die Eingänge des zweiten Eingangsfilters 1521 angeschlossen. Der zweite Spannungsteiler 1532 kann beispielsweise die Empfangsschwelle T2 von Fig. 4 einstellen.

Die Schaltung der Widerstände in den Widerstandsnetzwerken der Spannungsteiler 1531, 1532 ist symmetrisch aufgebaut.

Zur Einhaltung der Anforderung des Eingangswiderstands Rin an CANH und CANL weisen die Spannungsteiler 1531, 1532 jeweils zwei Widerstandspfade auf, nämlich einen für den Anschluss CANH und einen für den Anschluss CANL. Hierbei gilt Rin_CANH und Rin_CANL = 25kOhm...50kOhm. Typischerweise wird ein Eingangswiderstand Rin von 37,5kOhm für den Anschluss (Pin) CANH für das Signal CAN_H und für den Anschluss (Pin) CANL für das Signal CAN_L gewählt.

Die Schalteinheit Sw1 kann ein Transistor sein, insbesondere ein NMOS-Transistor. Die Abkürzung "NMOS" bezeichnet einen n-Kanal-MOSFET, wobei die Abkürzung "MOSFET" für Metall-Oxid-Feldeffekttransistor steht.

Die Spannungsteiler 1531, 1532 bilden eine doppelte Teilerstruktur. Die Spannungsteiler 1531, 1532 teilen die Busspannungen, die von den Signalen CAN_H, CAN_L erzeugt werden, auf Werte herunter, welche von den Komparatorlinien 151, 152 verarbeitet werden können.

Durch die doppelte Teilerstruktur der Empfangsstufe 15 können zwei verschiedene Empfangsschwellen der Empfangsschwellen T1, T2, T3 unabhängig voneinander und somit auch gleichzeitig oder simultan geprüft werden. Zusätzlich dazu kann mit Hilfe der Schalteinheit Sw1, angesteuert durch die Betriebsarteinstelleinheit 1533, zwischen zwei Empfangsschwellen der Empfangsschwellen T1, T2, T3 umgeschaltet werden. Dadurch können entweder die Empfangsschwellen T1, T2 gemäß Fig. 4 unabhängig voneinander und gleichzeitig geprüft werden oder die Empfangsschwellen T1, T3 gemäß Fig. 4 unabhängig voneinander und gleichzeitig geprüft werden. Es sind also zwei der drei Empfangsschwellen T1, T2, T3 je nach Bedarf zu der dritten Empfangsschwelle schaltbar.

Die Betriebsarteinstelleinheit 1533 stellt somit die Empfangsschwellen T1, T2, T3 gemäß der derzeit geforderten Betriebsart (SLOW, FAST_TX, FAST_RX) der Sende-/Empfangseinrichtung 12 ein. Dabei gilt bei dem zuvor beschriebenen Beispiel:

**Tabelle 2: Zuordnung von Komparator-Ausgangssignalen und Empfangsschwellen**

| Signal | detektierte Empfangsschwelle Phase 451 | detektierte Empfangsschwelle Phase 452 |
|---|---|---|
| CA1 | T1 | T3 |
| CA2 | T2 | - |

Konkret heißt das für das vorangehende Beispiel, dass nur eine einzige Empfangsschwelle, die Empfangsschwelle T3, geprüft wird, wenn sich die Sende/Empfangseinrichtung 12 selbst in einer FAST-Betriebsart (FAST_TX, FAST_RX) befindet, also während der Datenphase 452. Hierfür wird die erste Empfangskomparatorlinie 151 verwendet und auf die Empfangsschwelle T3 (typischerweise VDIFF = 0 V) geschaltet. Während der Arbitrationsphase 451 werden dagegen die beiden Empfangskomparatorlinien 151, 152 verwendet.

Der zweite Komparator 1522 kann beispielsweise eingestellt sein, Signale am Bus 40 in der Datenphase 452 zu erkennen, die eine typische Bitzeit t_bt2 (Fig. 3) von 50ns haben. In diesem Fall werden die Zustände L0/L1 in der Datenphase 452 mit einer Übertragungsrate von 20Mbit/s übertragen bzw. gesendet. Dies erfordert eine sehr hohe Bandbreite für den zweiten Komparator 1522.

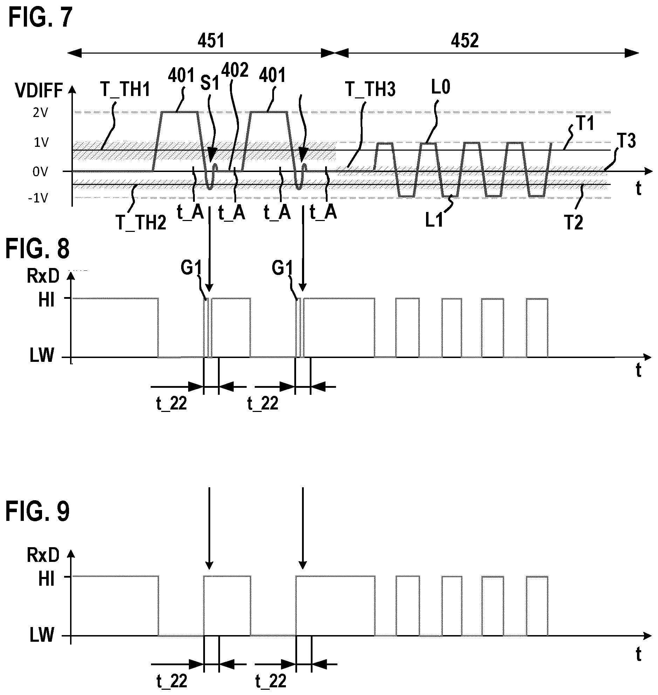

Ist die Sende-/Empfangseinrichtung 12 derzeit ein Empfangsknoten, das heißt eine andere Teilnehmerstation 10, 20, 30 am Bus 40 sendet die Nachricht 45 auf den Bus 40, gilt Folgendes. Bei Erkennung eines L1-Zustands mit t_bt2 = 50ns (Fig. 3) muss der zweite Komparator 1522 dies an seinem Ausgang in dem Signal CA2 mit einem Puls von mindestens 15ns quittieren, wie in dem Standard CiA610-3 spezifiziert. Infolgedessen treten bei einem Übergang von einem niederohmigen Dominant-Zustand 401 in einen dazu vergleichsweise hochohmigen Rezessiv-Zustand 402 Schwingungen S1 in der Differenzspannung VDIFF am Bus 40 auf, wie in Fig. 7 gezeigt.

Ist der Maskierblock 155 nicht aktiv, gibt der Empfangssignaltreiber 1221 ein Empfangssignal RxD aus, wie in Fig. 8 gezeigt. Aufgrund der geforderten hohen Bandbreite des zweiten Komparators 1522 erscheinen die Unterschwinger (Schwingung S1) von Fig. 7 in Form von dominanten Glitches G1 am Ausgang RXD im Empfangssignal RxD, wie in Fig. 8 gezeigt. Die Glitches G1 sind kleine Störungen, die an dem Ausgang RXD in dem Empfangssignal RxD sichtbar sind. Bei dem Beispiel von Fig. 8 sind alle Unterschwinger (Schwingung S1) von Fig. 7 jeweils in dem RxD-Signal abgebildet und so für die Kommunikationssteuereinrichtung 11 sichtbar.

Je nach Topologie und Schwingdauer können die unerwünschten Glitches G1 in dem Empfangssignal RxD bis zu dem Abtastpunkt t_A (Sample-Punkt) auftreten. Durch die Glitches G1 wird das Empfangssignal RxD verfälscht, was die Kommunikation im Bussystem 1 stören kann.

Ist der Maskierblock 155 jedoch aktiv, gibt der Empfangssignaltreiber 1221 ein Empfangssignal RxD aus, wie in Fig. 9 gezeigt. Bei dem resultierenden Empfangssignal von Fig. 9 sind alle Unterschwinger (Schwingung S1) von Fig. 7 jeweils ausmaskiert und daher nicht in dem RxD-Signal von Fig. 9 abgebildet und so auch nicht für die Kommunikationssteuereinrichtung 11 sichtbar.

Bei dem Empfangsmodul 122 von Fig. 6 wird das Ausgangssignal CA2 des zweiten Komparators 1522 an den Maskierblock 155, insbesondere sein Zeitglied 1551, ausgegeben.

Gemäß einer ersten Möglichkeit bewirkt das Zeitglied 155, dass der Ausgang des zweiten Komparators 1522 standardmäßig immer bei Eintritt in einen rezessiven Buszustand, bei dem die Empfangsschwelle T1 unterschritten wird und eine Detektion mit dem ersten Komparators 1512 erfolgt, für eine vorbestimmte Maskierzeit t_22 ausmaskiert wird. Damit werden die Unterschwinger (Schwingung S1) in der Differenzspannung VDIFF von Fig. 7 von dem zweiten Komparator 1522 "übersehen" und nicht am RxD signalisiert, wie in Fig. 9 gezeigt. Erst nach Ablauf der vorbestimmten Zeit t_22 wird der Ausgang des zweiten Komparators 1522 wieder freigeschaltet. Damit ist die zweite Komparatorlinie 152 schnell und in der Lage, die in dem Standard CiA610-3 geforderten Werte einzuhalten.

Aufgrund des Maskierblocks 155 weist der zweite Komparator 1522 somit nicht standardmäßig in der ersten Kommunikationsphase 451 bzw. in der ersten Betriebsart (SLOW-Phase) die hohe Bandbreite auf, um aus einem 50ns breiten Bit am Bus 40 mindestens 15ns am Ausgang zu detektieren.

Der Nominalwert der vorbestimmten Maskierzeit t_22 kann beispielsweise etwa 500 ns betragen. Der Wert für die vorbestimmte Maskierzeit t_22 kann in der Sende-/Empfangseinrichtung 12 konfiguriert werden oder sein. Dies ist vorteilhaft, da die differentiellen Unterschwinger (Schwingung S1) in der Differenzspannung VDIFF von Fig. 7 unter anderem auch von der Bus-Topologie abhängen, wie Anzahl von Stichleitungen, Stern-Topologie, usw.

Alternativ kann der Wert für die vorbestimmte Maskierzeit t_22 in der Sende-/Empfangseinrichtung 12 automatisiert eingestellt werden.

Gemäß einer zweiten Möglichkeit gilt Folgendes. Wird durch eine Nachricht 45, die von einer anderen Teilnehmerstation 10, 20, 30 des Bussystems 1 gesendet wurde, in der Sende-/Empfangseinrichtung 12 die Empfangsschwelle T1 überschritten, so liegt entweder ein dominanter oder ein L0-Buszustand vor. Damit wurde in der Sende-/Empfangseinrichtung 12 erkannt, dass am Bus 40 eine Kommunikation stattfindet. Infolgedessen geht das Empfangssignal RxD auf den Wert LW (LOW), wodurch die Kommunikationssteuereinrichtung 11 erkennt, dass der Bus 40 belegt ist.

Gemäß einer dritten Möglichkeit gilt Folgendes. Wird die Empfangsschwelle T1 nicht überschritten, so kann entweder ein niedriger L0-Zustand von einer anderen Teilnehmerstation 10, 20, 30 des Bussystems 1 gesendet worden sein, welcher L0-Zustand mit der Empfangsschwelle T1 nicht detektiert wurde, oder der Bus 40 ist wirklich rezessiv und damit frei. Somit wird nach Ablauf der vorbestimmten Zeit t_22 mit dem zweiten Komparator 1522, also mit der hohen Bandbreite gemessen. Dadurch können die L1-Zustände im Signal auf dem Bus 40 durch den zweiten Komparator 1522 sicher erkannt werden.

Das heißt, der Maskierblock 155 kann mit Hilfe des Zeitglieds 1551 und der Logikschaltung 1552 auch in Empfangsknoten immer die richtige Erkennung der einzelnen Kommunikationsphasen 451, 452 am Bus 40 sicherstellen, auch wenn der Physical Layer zwischen den Kommunikationsphasen 451, 452 zum Senden von Signalen CAN_H, CAN_L auf den Bus 40 umgeschaltet wird.

Dies ermöglicht eine hohe Datenübertragungsrate am Bus 40 und somit einen sehr effizienten Betrieb des Bussystems 1.

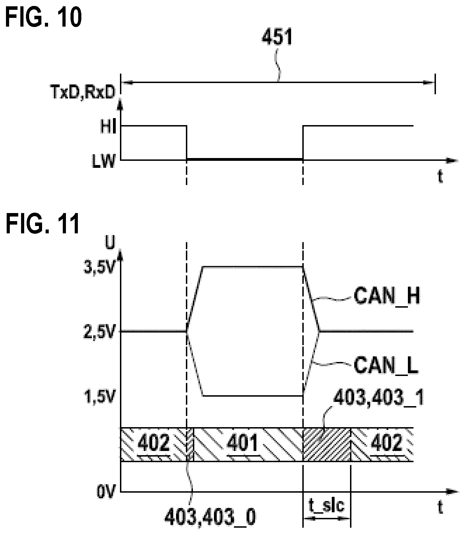

Gemäß einem zweiten Ausführungsbeispiel erzeugt das Sendemodul 121 die Signale CAN_H, CAN_L für die zwei Kommunikationsphasen auf dem Bus 40, wie anhand von Fig. 10 bis Fig. 13 nachfolgend beschrieben.

Fig. 10 zeigt ein Beispiel für einen Teil des digitalen Sendesignals TxD, welches das Sendemodul 121 in der Arbitrationsphase 451 von der Kommunikationssteuereinrichtung 11 empfängt, und daraus die Signale CAN_H, CAN_L für den Bus 40 erzeugt. In Fig. 10 wechselt das Sendesignal TxD von einem Zustand LW (Niedrig = Low) zu einem Zustand HI (Hoch = High) und wieder zurück zu dem Zustand LW (Niedrig = Low).

Das Empfangssignal RxD ist im Idealfall identisch zu dem Sendesignal TxD. In einem solchen Idealfall gibt es keine Sendeverzögerung /Laufzeit, insbesondere über den Bus 40, und keinen etwaigen Empfangsfehler.

Wie in Fig. 11 genauer gezeigt, kann das Sendemodul 121 für das Sendesignal TxD von Fig. 10 in der Betriebsart CAN SIC oder CAN XL die Signale CAN_H, CAN_L von Fig. 11 für die Busadern 41, 42 erzeugen. Im Unterschied zu Fig. 3, ist bei den Signalen von Fig. 11 zusätzlich ein Zustand 403 (sic) vorhanden. Der Zustand 403 (sic) kann unterschiedlich lang sein, wie mit dem Zustand 403_0 (sic) beim Übergang von dem Zustand 402 (rec) zu dem Zustand 401 (dom) gezeigt und dem Zustand 403_1 (sic) beim Übergang von dem Zustand 401 (dom) zu dem Zustand 402 (rec) gezeigt. Der Zustand 403_0 (sic) ist zeitlich kürzer als der Zustand 403_1 (sic). Um Signale gemäß Fig. 11 zu erzeugen, wird das Sendemodul 121 in eine SIC-Betriebsart (SIC-Mode) geschaltet.

Das Durchlaufen des kurzen sic-Zustands 403_0 ist gemäß dem Standard CiA610-3 für CAN XL nicht gefordert und der Zustand ist abhängig von der Art der Implementierung. Die zeitliche Dauer des "langen" Zustands 403_1 (sic) ist für CAN-SIC als auch für die SIC-Betriebsart bei CAN-XL spezifiziert als t_sic < 530ns, beginnend mit der steigenden Flanke an dem Sendesignal TxD von Fig. 10.

Das Sendemodul 121 soll im "langen" Zustand 403_1 (sic) die Impedanz zwischen den Busadern 41 (CANH) und 42 (CANL) möglichst gut an den charakteristischen Wellenwiderstand Zw der verwendeten Busleitung anpassen. Hierbei gilt Zw=100Ohm oder 120Ohm. Diese Anpassung verhindert Reflexionen und lässt somit den Betrieb bei höheren Bitraten zu. Zur Vereinfachung wird nachfolgend immer von dem Zustand 403 (sic) oder sic-Zustand 403 gesprochen.

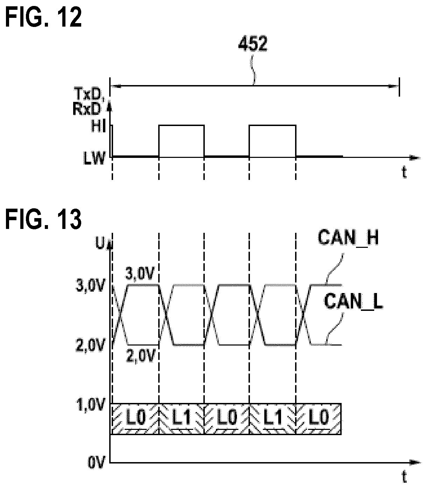

Fig. 12 zeigt ein Beispiel für einen anderen Teil des digitalen Sendesignals TxD, welches das Sendemodul 121 gemäß dem zweiten Ausführungsbeispiel in der Datenphase 452 von der Kommunikationssteuereinrichtung 11 (Fig. 1) empfängt, und daraus die Signale CAN_H, CAN_L für den Bus 40 erzeugt. In Fig. 12 wechselt das Sendesignal TxD mehrmals von Zustand HI (Hoch = High) zu einem Zustand LW (Niedrig = Low) und wieder zu einem Zustand HI (Hoch = High) und so weiter.

Wie in Fig. 13 genauer gezeigt, erzeugt das Sendemodul 121 für das Sendesignal TxD von Fig. 12 die Signale CAN_H, CAN_L für die Busadern 41, 42 derart, dass sich der Zustand L0 für einen Zustand LW (Niedrig = Low) ausbildet. Zudem bildet sich der Zustand L1 für einen Zustand HI (Hoch = High) aus.

Es ist möglich, dass für die zwei Buszustände L0, L1 zumindest zeitweise kein dominanter und rezessiver Buszustand verwendet wird, sondern stattdessen ein erster Buszustand und ein zweiter Buszustand verwendet werden, die beide getrieben werden. Ein Beispiel für ein solches Bussystem ist ein CAN XL-Bussystem.

Das Empfangsmodul 122 kann auch die Signale gemäß Fig. 11 und Fig. 13 in den beiden verschiedenen Kommunikationsphasen, nämlich der SIC-Betriebsart oder Arbitrationsphase 451 und der Datenphase 452 empfangen. Hierfür schaltet das Empfangsmodul 122 die Empfangsschwellen T1, T3 für die jeweiligen Betriebsarten um, wie zuvor in Bezug auf das vorangehende Ausführungsbeispiel beschrieben.

Die Betriebsarteinstelleinheit 1533 stellt somit die Empfangsschwellen T1, T2, T3 gemäß der derzeit geforderten Betriebsart (SIC, FAST_TX, FAST_RX) der Sende-/Empfangseinrichtung 120 ein.

Auch auf diese Weise können die Komparatorlinien 151, 152 mit dem Maskierblock 155 von Fig. 6 sehr vorteilhaft betrieben werden.

Alle zuvor beschriebenen Ausgestaltungen der Sende-/Empfangseinrichtung 12, des Sendemoduls 121, des Empfangsmoduls 122, der Teilnehmerstationen 10, 20, 30, des Bussystems 1 und des darin ausgeführten Verfahrens gemäß dem ersten und zweiten Ausführungsbeispiel und deren Modifikationen können einzeln oder in allen möglichen Kombinationen Verwendung finden. Zusätzlich sind insbesondere folgende Modifikationen denkbar.

Das zuvor beschriebene Bussystem 1 gemäß dem ersten und zweiten Ausführungsbeispiel ist anhand eines auf dem CAN-Protokoll basierenden Bussystems beschrieben. Das Bussystem 1 gemäß dem ersten und/oder zweiten Ausführungsbeispiel kann jedoch alternativ eine andere Art von Kommunikationsnetz sein, bei dem die Signale als differentielle Signale übertragen werden. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf den Bus 40 gewährleistet ist.

Das Bussystem 1 gemäß dem ersten und/oder zweiten Ausführungsbeispiel und deren Modifikationen ist insbesondere ein CAN-Bussystem oder ein CAN-HS-Bussystem oder ein CAN FD-Bussystem oder ein CAN SIC-Bussystem oder ein CAN XL-Bussystem. Das Bussystem 1 kann jedoch ein anderes Kommunikationsnetzwerk sein, bei dem die Signale als differentielle Signale und seriell über den Bus 40 übertragen werden.

Somit ist die Funktionalität der zuvor beschriebenen Ausführungsbeispiele beispielsweise bei Sende-/Empfangseinrichtungen 12, 22 einsetzbar, die in einem CAN-Bussystem oder einem CAN-HS-Bussystem oder einem CAN FD-Bussystem oder einem CAN SIC-Bussystem oder einem CAN XL-Bussystem betreibbar sind.

Die Anzahl und Anordnung der Teilnehmerstationen 10, 20, 30 in dem Bussystem 1 gemäß dem ersten und zweiten Ausführungsbeispiel und deren Modifikationen ist beliebig. Insbesondere sind nur Teilnehmerstationen 10 oder nur Teilnehmerstationen 30 in den Bussystemen 1 des ersten oder zweiten Ausführungsbeispiels vorhanden.

## Patentansprüche

1. Sende-/Empfangseinrichtung (12) für eine Teilnehmerstation (10; 30) eines seriellen Bussystems (1), bei welchem differentielle Signale (CAN_H, CAN_L) auf einem Bus (40) des Bussystems (1) in einer ersten Kommunikationsphase (451) einer Kommunikation auf dem Bus (40) mit einem ersten Physical Layer (451_P) erzeugt sind und in einer zweiten Kommunikationsphase (452) der Kommunikation auf dem Bus (40) mit einem zweiten Physical Layer (452_P) erzeugt sind, wobei die Sende-/Empfangseinrichtung (12) aufweist
einen ersten Komparator (1512) zur Auswertung der von dem Bus (40) empfangenen differentiellen Signalen (CAN_H, CAN_L) mit einer ersten Empfangsschwelle (T1) in der ersten Kommunikationsphase (451) und zur Auswertung der von dem Bus (40) empfangenen differentiellen Signale (CAN_H, CAN_L) mit einer dritten Empfangsschwelle (T3) in der zweiten Kommunikationsphase (452), wobei der erste Komparator (1512) zur Ausgabe eines Ausgangssignals (CA1) ausgestaltet ist, um ein digitales Empfangssignal (RxD) an eine Kommunikationssteuereinrichtung (11) der Teilnehmerstation (10; 30) auszugeben,
einen zweiten Komparator (1522) zur Auswertung der von dem Bus (40) empfangenen differentiellen Signale (CAN_H, CAN_L) mit einer zweiten Empfangsschwelle (T2) in der ersten Kommunikationsphase (451) für den Empfangssignaltreiber (1221), und
einen Maskierblock (155) zur Erzeugung eines maskierten Komparatorsignals (Cm), das ein zeitweise maskiertes Ausgangssignal (CA2) des zweiten Komparators (1522) ist, und zur Erzeugung eines Ausgangssignals (C1) aus dem maskierten Komparatorsignal (Cm) und dem Ausgangssignal (CA1) des ersten Komparators (1512) für den Empfangssignaltreiber (1221).

2. Sende-/Empfangseinrichtung (12) nach Anspruch 1, wobei der Maskierblock (155) aufweist
ein Zeitglied (1551), das an einen Ausgang des zweiten Komparators (1522) angeschlossen ist und zur Ausgabe des maskierten Komparatorsignals (Cm) ausgestaltet ist, und
eine Logikschaltung (1552), die ausgestaltet ist, aus dem Ausgangssignal (CA1) des ersten Komparators (1512) und dem maskierten Komparatorsignal (Cm) ein Signal (C1) zur Ausgabe an den Empfangssignaltreiber (1221) zu erzeugen.

3. Sende-/Empfangseinrichtung (12) nach Anspruch 2, wobei die Logikschaltung (1552) ein UND-Gatter ist, um seriell eine logische UND-Verknüpfung des Ausgangssignals (CA1) des ersten Komparators (1512) und des maskierten Komparatorsignals (Cm) zu bilden.

4. Sende-/Empfangseinrichtung (12) nach einem der vorangehenden Ansprüche, zudem mit
einem Treiber (1221) zum Treiben eines digitalen Empfangssignals (RxD) an eine Kommunikationssteuereinrichtung (11) einer Teilnehmerstation (10; 30) des Bussystems (1), und
einer Empfangssignal-Logikschaltung (1222) zum Weiterleiten eines Ausgangssignals (C_1) von einer ersten Komparatorlinie (151), die den ersten Komparator (1512) aufweist, und eines Ausgangssignals (C_2) von einer zweiten Komparatorlinie (152), die den zweiten Komparator (1522) aufweist, an den Treiber (1221), wenn die Kommunikation in der ersten Kommunikationsphase (451) stattfindet, und zum Weiterleiten nur des Ausgangssignals (C_1) von der ersten Komparatorlinie (151) an den Treiber (1221), wenn die Kommunikation in der zweiten Kommunikationsphase (451) stattfindet.

5. Sende-/Empfangseinrichtung (12) nach einem der vorangehenden Ansprüche, zudem mit
einem ersten Spannungsteiler (1531), der an den Bus (40) angeschlossen ist und der die von dem Bus (40) empfangenen differentiellen Signale (CAN_H, CAN_L) zu dem ersten Komparator (1512) ausgibt,
einem zweiten Spannungsteiler (1532), der an den Bus (40) angeschlossen ist und der die von dem Bus (40) empfangenen differentiellen Signale (CAN_H, CAN_L) zu dem zweiten Komparator (1522) ausgibt.

6. Sende-/Empfangseinrichtung (12) nach Anspruch 5,
wobei der erste und zweite Spannungsteiler (1531, 1532) eine Schaltung aus Widerständen aufweisen, an welchen der erste und zweite Komparator (1512, 1522) angeschlossen sind, und
wobei der erste und zweite Komparator (1512, 1522) die differentiellen Signale (CAN_H, CAN_L) simultan auswerten.

7. Sende-/Empfangseinrichtung (12) nach Anspruch 5 oder 6,
wobei der erste Spannungsteiler (1531) einen Schalter (Sw1) aufweist, der angeordnet ist, in einer ersten Schaltstellung die erste Empfangsschwelle (T1) für den ersten Spannungsteiler (1532) einzustellen und in einer zweiten Schaltstellung die dritte Empfangsschwelle (T3) für den ersten Spannungsteiler (1532) einzustellen, und
wobei der zweite Spannungsteiler (1532) zur Einstellung der zweiten Empfangsschwelle (T2) ausgestaltet ist.

8. Sende-/Empfangseinrichtung (12) nach Anspruch 7, wobei der Schalter (Sw1) zum Hinzuschalten oder Wegschalten eines Widerstands zur Masse angeordnet ist.

9. Sende-/Empfangseinrichtung (12) nach Anspruch 7 oder 8, wobei der Schalter (Sw1) ein NMOS-Transistor ist.

10. Sende-/Empfangseinrichtung (12) nach einem der Ansprüche 7 bis 9,
wobei die Sende-/Empfangseinrichtung (12) ausgestaltet ist, das Ausgangssignal (CA2) des zweiten Komparators (1522) zu dem Empfangssignaltreiber (1221) auszugeben, wenn der Schalter (Sw1) in seiner ersten Schaltstellung die erste Empfangsschwelle (T1) in dem ersten Spannungsteiler (1532) eingestellt hat, und
wobei die Sende-/Empfangseinrichtung (12) ausgestaltet ist, das Ausgangssignal (CA2) des zweiten Komparators (1522) nicht zu dem Empfangssignaltreiber (1221) auszugeben, wenn der Schalter (Sw1) in seiner zweiten Schaltstellung die dritte Empfangsschwelle (T3) in dem ersten Spannungsteiler (1532) eingestellt hat.

11. Sende-/Empfangseinrichtung (12) nach einem der Ansprüche 7 bis 10, zudem mit einer Betriebsarteinstelleinheit (1533) zum Ansteuern des Schalters (Sw1) zum Umschalten des ersten Spannungsteilers (1531) zwischen der ersten und dritten Empfangsschwelle (T1, T3) in Abhängigkeit davon, ob auf dem Bus (40) die erste oder zweite Kommunikationsphase (451, 452) stattfindet.

12. Sende-/Empfangseinrichtung (12; 22; 120) nach einem der vorangehenden Ansprüche, zudem mit einem Sendemodul (121) zum Senden von Signalen auf einen Bus (40) des Bussystems (1).

13. Teilnehmerstation (10; 20; 30) für ein serielles Bussystem (1), mit
einer Sende-/Empfangseinrichtung (12; 22) nach einem der vorangehenden Ansprüche, und
einer Kommunikationssteuereinrichtung (11; 21) zum Steuern der Kommunikation in dem Bussystem (1) und zur Erzeugung eines digitalen Sendesignals (TxD) für das Sendemodul (121).

14. Teilnehmerstation (10; 20; 30) nach Anspruch 11, wobei die Teilnehmerstation (10; 20; 30) für die Kommunikation in einem Bussystem (1) ausgestaltet ist, in dem zumindest zeitweise ein exklusiver, kollisionsfreier Zugriff einer Teilnehmerstation (10, 20, 30) auf den Bus (40) des Bussystems (1) gewährleistet ist.

15. Verfahren zum Empfangen von differentiellen Signalen in einem seriellen Bussystem (1), bei welchem differentielle Signale (CAN_H, CAN_L) auf einem Bus (40) des Bussystems (1) in einer ersten Kommunikationsphase (451) einer Kommunikation auf dem Bus (40) mit einem ersten Physical Layer (451_P) erzeugt werden und in einer zweiten Kommunikationsphase (452) der Kommunikation auf dem Bus (40) mit einem zweiten Physical Layer (452_P) erzeugt werden, wobei das Verfahren die Schritte aufweist, mit
Empfangen, mit einer Sende-Empfangseinrichtung (12), von differentiellen Signalen (CAN_H, CAN_L) von dem Bus (40),
Auswerten, mit einem ersten Komparator (1512), der von dem Bus (40) empfangenen differentiellen Signale (CAN_H, CAN_L) mit einer ersten Empfangsschwelle (T1) in der ersten Kommunikationsphase (451),
Auswerten, mit dem ersten Komparator (1512), der von dem Bus (40) empfangenen differentiellen Signale (CAN_H, CAN_L) mit einer dritten Empfangsschwelle (T3) in der zweiten Kommunikationsphase (452), wobei der erste Komparator (1512) zur Ausgabe eines Ausgangssignals (CA1) in der ersten und zweiten Kommunikationsphase (451, 452) ein digitales Empfangssignal (RxD) an eine Kommunikationssteuereinrichtung (11) der Teilnehmerstation (10; 30) ausgibt, und
Auswerten, mit einem zweiten Komparator (1522), der von dem Bus (40) empfangenen differentiellen Signale (CAN_H, CAN_L) mit einer zweiten Empfangsschwelle (T2) in der ersten Kommunikationsphase (451) für den Empfangssignaltreiber (1221), und
Erzeugen, mit einem Maskierblock (155), eines maskierten Komparatorsignals (Cm), das ein zeitweise maskiertes Ausgangssignal (CA2) des zweiten Komparators (1522) ist, und
Erzeugen, mit dem Maskierblock (155), eines Ausgangssignals (C1) aus dem maskierten Komparatorsignal (Cm) und dem Ausgangssignal (CA1) des ersten Komparators (1512) für den Empfangssignaltreiber (1221).

## Claims

1. Transmitting/receiving device (12) for a subscriber station (10; 30) of a serial bus system (1), in which differential signals (CAN_H, CAN_L) on a bus (40) of the bus system (1) are generated using a first physical layer (451_P) in a first communication phase (451) of communication on the bus (40) and are generated using a second physical layer (452_P) in a second communication phase (452) of communication on the bus (40), the transmitting/receiving device (12) comprising
a first comparator (1512) for evaluating the differential signals (CAN_H, CAN_L) received from the bus (40) using a first reception threshold (T1) in the first communication phase (451) and for evaluating the differential signals (CAN_H, CAN_L) received from the bus (40) using a third reception threshold (T3) in the second communication phase (452), the first comparator (1512) being configured to output an output signal (CA1) in order to output a digital received signal (RxD) to a communication control device (11) of the subscriber station (10; 30),
a second comparator (1522) for evaluating the differential signals (CAN_H, CAN_L) received from the bus (40) using a second reception threshold (T2) in the first communication phase (451) for the received signal driver (1221), and
a masking block (155) for generating a masked comparator signal (Cm), which is a temporarily masked output signal (CA2) of the second comparator (1522), and for generating an output signal (C1) from the masked comparator signal (Cm) and the output signal (CA1) of the first comparator (1512) for the received signal driver (1221).

2. Transmitting/receiving device (12) according to Claim 1, the masking block (155) comprising
a timer (1551) connected to an output of the second comparator (1522) and configured to output the masked comparator signal (Cm), and
a logic circuit (1552) configured to generate a signal (C1) for output to the received signal driver (1221) from the output signal (CA1) of the first comparator (1512) and the masked comparator signal (Cm).

3. Transmitting/receiving device (12) according to Claim 2, the logic circuit (1552) being an AND gate to serially calculate a logic AND function for the output signal (CA1) of the first comparator (1512) and the masked comparator signal (Cm).

4. Transmitting/receiving device (12) according to one of the preceding claims, additionally having
a driver (1221) for driving a digital received signal (RxD) to a communication control device (11) of a subscriber station (10; 30) of the bus system (1), and
a received signal logic circuit (1222) for forwarding an output signal (C_1) from a first comparator line (151) comprising the first comparator (1512) and an output signal (C_2) from a second comparator line (152) comprising the second comparator (1522) to the driver (1221) when communication takes place in the first communication phase (451), and for forwarding only the output signal (C_1) from the first comparator line (151) to the driver (1221) when communication takes place in the second communication phase (451).

5. Transmitting/receiving device (12) according to one of the preceding claims, additionally having
a first voltage divider (1531), which is connected to the bus (40) and which outputs the differential signals (CAN_H, CAN_L) received from the bus (40) to the first comparator (1512),
a second voltage divider (1532), which is connected to the bus (40) and which outputs the differential signals (CAN_H, CAN_L) received from the bus (40) to the second comparator (1522).

6. Transmitting/receiving device (12) according to Claim 5,
the first and second voltage dividers (1531, 1532) comprising a circuit of resistors, to which the first and second comparators (1512, 1522) are connected, and
the first and second comparators (1512, 1522) evaluating the differential signals (CAN_H, CAN_L) simultaneously.

7. Transmitting/receiving device (12) according to Claim 5 or 6,
the first voltage divider (1531) comprising a switch (Sw1) designed to set the first reception threshold (T1) for the first voltage divider (1532) in a first switching position and to set the third reception threshold (T3) for the first voltage divider (1532) in a second switching position, and
the second voltage divider (1532) being configured to set the second reception threshold (T2).

8. Transmitting/receiving device (12) according to Claim 7, the switch (Sw1) being designed to connect or disconnect a resistor to/from earth.

9. Transmitting/receiving device (12) according to Claim 7 or 8, the switch (Sw1) being an NMOS transistor.

10. Transmitting/receiving device (12) according to one of Claims 7 to 9,
the transmitting/receiving device (12) being configured to output the output signal (CA2) of the second comparator (1522) to the received signal driver (1221) when the switch (Sw1) in its first switching position has set the first reception threshold (T1) in the first voltage divider (1532), and
the transmitting/receiving device (12) being configured not to output the output signal (CA2) of the second comparator (1522) to the received signal driver (1221) when the switch (Sw1) in its second switching position has set the third reception threshold (T3) in the first voltage divider (1532).

11. Transmitting/receiving device (12) according to one of Claims 7 to 10, additionally having an operating mode setting unit (1533) for controlling the switch (Sw1) to switch the first voltage divider (1531) between the first and third reception thresholds (T1, T3) on the basis of whether the first or second communication phase (451, 452) takes place on the bus (40).

12. Transmitting/receiving device (12; 22; 120) according to one of the preceding claims, additionally having a transmitting module (121) for transmitting signals to a bus (40) of the bus system (1).

13. Subscriber station (10; 20; 30) for a serial bus system (1), having a transmitting/receiving device (12; 22) according to one of the preceding claims, and
a communication control device (11; 21) for controlling communication in the bus system (1) and for generating a digital transmission signal (TxD) for the transmitting module (121).

14. Subscriber station (10; 20; 30) according to Claim 11, the subscriber station (10; 20; 30) being configured for communication in a bus system (1), in which exclusive, collision-free access by a subscriber station (10, 20, 30) to the bus (40) of the bus system (1) is at least temporarily guaranteed.

15. Method for receiving differential signals in a serial bus system (1), wherein differential signals (CAN_H, CAN_L) on a bus (40) of the bus system (1) are generated using a first physical layer (451_P) in a first communication phase (451) of communication on the bus (40) and are generated using a second physical layer (452_P) in a second communication phase (452) of communication on the bus (40), the method comprising the steps of
using a transmitting/receiving device (12) to receive differential signals (CAN_H, CAN_L) from the bus (40),
using a first comparator (1512) to evaluate the differential signals (CAN_H, CAN_L) received from the bus (40) using a first reception threshold (T1) in the first communication phase (451),
using the first comparator (1512) to evaluate the differential signals (CAN_H, CAN_L) received from the bus (40) using a third reception threshold (T3) in the second communication phase (452), the first comparator (1512) outputting a digital received signal (RxD) to a communication control device (11) of the subscriber station (10; 30) in order to output an output signal (CA1) in the first and second communication phases (451, 452), and
using a second comparator (1522) to evaluate the differential signals (CAN_H, CAN_L) received from the bus (40) using a second reception threshold (T2) in the first communication phase (451) for the received signal driver (1221), and
using a masking block (155) to generate a masked comparator signal (Cm), which is a temporarily masked output signal (CA2) of the second comparator (1522), and
using the masking block (155) to generate an output signal (C1) from the masked comparator signal (Cm) and the output signal (CA1) of the first comparator (1512) for the received signal driver (1221).

## Revendications

1. Dispositif émetteur-récepteur (12) pour une station d'abonné (10 ; 30) d'un système de bus série (1), dans lequel des signaux différentiels (CAN_H, CAN_L) sont générés sur un bus (40) du système de bus (1) dans une première phase de communication (451) d'une communication sur le bus (40) avec une première couche physique (451_P) et sont générés dans une deuxième phase de communication (452) de la communication sur le bus (40) avec une deuxième couche physique (452_P), le dispositif émetteur/récepteur (12) comportant
un premier comparateur (1512) destiné à évaluer les signaux différentiels (CAN_H, CAN_L) reçus du bus (40) avec un premier seuil de réception (T1) dans la première phase de communication (451) et destiné à évaluer les signaux différentiels (CAN_H, CAN_L) reçus du bus (40) avec un troisième seuil de réception (T3) dans la deuxième phase de communication (452), le premier comparateur (1512) étant configuré pour délivrer un signal de sortie (CA1) pour délivrer un signal de réception numérique (RxD) à un dispositif de commande de communication (11) de la station d'abonné (10 ; 30),
un deuxième comparateur (1522) destiné à évaluer les signaux différentiels (CAN_H, CAN_L) reçus du bus (40) avec un deuxième seuil de réception (T2) dans la première phase de communication (451) pour le pilote (1221) de signal de réception, et
un bloc de masquage (155) destiné à générer un signal de comparateur masqué (Cm), qui est un signal de sortie temporairement masqué (CA2) du deuxième comparateur (1522), et destiné à générer un signal de sortie (C1) à partir du signal de comparateur masqué (Cm) et du signal de sortie (CA1) du premier comparateur (1512) pour le pilote (1221) de signal de réception.

2. Dispositif émetteur/récepteur (12) selon la revendication 1, le bloc de masquage (155) comportant
un relais temporisateur (1551), qui est raccordé à une sortie du deuxième comparateur (1522) et qui est configuré pour délivrer le signal de comparateur masqué (Cm), et
un circuit logique (1552), qui est configuré pour générer à partir du signal de sortie (CA1) du premier comparateur (1512) et du signal de comparateur masqué (Cm) un signal (C1) destiné à être délivré au pilote (1221) de signal de réception.

3. Dispositif émetteur-récepteur (12) selon la revendication 2, le circuit logique (1552) étant une porte ET pour former une opération logique ET du signal de sortie (CA1) du premier comparateur (1512) et du signal de comparateur masqué (Cm) en série.

4. Dispositif émetteur-récepteur (12) selon l'une des revendications précédentes, avec en outre
un pilote (1221) pour piloter un signal de réception numérique (RxD) sur un dispositif de commande de communication (11) d'une station d'abonné (10 ; 30) du système de bus (1), et
un circuit logique de signal de réception (1222) destiné à transférer un signal de sortie (C_1) d'une première ligne de comparateur (151), qui comporte le premier comparateur (1512), et un signal de sortie (C_2) d'une deuxième ligne de comparateur (152), qui comporte le deuxième comparateur (1522), au pilote (1221) lorsque la communication a lieu dans la première phase de communication (451), et destiné à transférer seulement le signal de sortie (C_1) de la première ligne de comparateur (151) au pilote (1221) lorsque la communication a lieu dans la deuxième phase de communication (451).

5. Dispositif émetteur-récepteur (12) selon l'une des revendications précédentes, avec en outre
un premier diviseur de tension (1531), qui est raccordé au bus (40) et qui délivre les signaux différentiels (CAN_H, CAN_L) reçus du bus (40) au premier comparateur (1512),
un deuxième diviseur de tension (1532), qui est raccordé au bus (40) et qui délivre les signaux différentiels (CAN_H, CAN_L) reçus du bus (40) au deuxième comparateur (1522).

6. Dispositif émetteur/récepteur (12) selon la revendication 5,
le premier et le deuxième diviseur de tension (1531, 1532) comportant un circuit composé de résistances auxquelles sont raccordés le premier et le deuxième comparateur (1512, 1522), et
le premier et le deuxième comparateur (1512, 1522) évaluant simultanément les signaux différentiels (CAN_H, CAN_L).

7. Dispositif émetteur/récepteur (12) selon la revendication 5 ou 6,
le premier diviseur de tension (1531) comportant un commutateur (Sw1), qui est disposé pour régler le premier seuil de réception (T1) pour le premier diviseur de tension (1532) dans une première position de commutation et pour régler le troisième seuil de réception (T3) pour le premier diviseur de tension (1532) dans une deuxième position de commutation, et
le deuxième diviseur de tension (1532) étant configuré pour régler le deuxième seuil de réception (T2).

8. Dispositif émetteur/récepteur (12) selon la revendication 7, le commutateur (Sw1) étant disposé pour connecter ou déconnecter une résistance par rapport à la masse.

9. Dispositif émetteur-récepteur (12) selon la revendication 7 ou 8, le commutateur (Sw1) étant un transistor NMOS.

10. Dispositif émetteur-récepteur (12) selon l'une des revendications 7 à 9,
le dispositif émetteur-récepteur (12) étant configuré pour délivrer le signal de sortie (CA2) du deuxième comparateur (1522) au pilote (1221) de signal de réception lorsque le commutateur (Sw1) a réglé le premier seuil de réception (T1) dans le premier diviseur de tension (1532) dans sa première position de commutation, et
le dispositif émetteur-récepteur (12) étant configuré pour ne pas délivrer le signal de sortie (CA2) du deuxième comparateur (1522) au pilote (1221) de signal de réception lorsque le commutateur (Sw1) a réglé le troisième seuil de réception (T3) dans le premier diviseur de tension (1532) dans sa deuxième position de commutation.

11. Dispositif émetteur/récepteur (12) selon l'une des revendications 7 à 10, avec en outre une unité de réglage de mode de fonctionnement (1533) pour actionner le commutateur (Sw1) pour commuter le premier diviseur de tension (1531) entre le premier et le troisième seuil de réception (T1, T3) selon que la première ou la deuxième phase de communication (451, 452) a lieu sur le bus (40).

12. Dispositif émetteur/récepteur (12 ; 22 ; 120) selon l'une des revendications précédentes, avec en outre un module émetteur (121) destiné à émettre des signaux sur un bus (40) du système de bus (1).

13. Station d'abonné (10 ; 20 ; 30) pour un système de bus série (1), avec un dispositif émetteur/récepteur (12 ; 22) selon l'une des revendications précédentes,
un dispositif de commande de communication (11 ; 21) destiné à commander la communication dans le système de bus (1) et à générer un signal d'émission numérique (TxD) pour le module émetteur (121).

14. Station d'abonné (10 ; 20 ; 30) selon la revendication 11, la station d'abonné (10 ; 20 ; 30) étant configurée pour la communication dans un système de bus (1), dans lequel un accès exclusif, sans collision d'une station d'abonné (10, 20, 30) au bus (40) du système de bus (1) est assuré au moins temporairement.

15. Procédé de réception de signaux différentiels dans un système de bus série (1), dans lequel des signaux différentiels (CAN_H, CAN_L) sont générés sur un bus (40) du système de bus (1) dans une première phase de communication (451) d'une communication sur le bus (40) avec une première couche physique (451_P) et sont générés dans une deuxième phase de communication (452) de la communication sur le bus (40) avec une deuxième couche physique (452_P), le procédé comportant les étapes de réception, par le dispositif émetteur-récepteur (12), de signaux différentiels (CAN_H, CAN_L) du bus (40),
évaluation, au moyen d'un premier comparateur (1512), des signaux différentiels (CAN_H, CAN_L) reçus du bus (40) avec un premier seuil de réception (T1) dans la première phase de communication (451),
évaluation, avec le premier comparateur (1512), des signaux différentiels (CAN_H, CAN_L) reçus du bus (40) avec un troisième seuil de réception (T3) dans la deuxième phase de communication (452), le premier comparateur (1512) destiné à délivrer un signal de sortie (CA1) dans la première et la deuxième phase de communication (451, 452) délivrant un signal de réception numérique (RxD) au dispositif de commande de communication (11) de la station d'abonné (10 ; 30), et
évaluation, avec un deuxième comparateur (1522), des signaux différentiels (CAN_H, CAN_L) reçus du bus (40) avec un deuxième seuil de réception (T2) dans la première phase de communication (451) pour le pilote (1221) de signal de réception, et
génération, avec un bloc de masquage (155), d'un signal de comparateur masqué (Cm), qui est un signal de sortie (CA2) temporairement masqué du deuxième comparateur (1522), et
génération, avec le bloc de masquage (155), d'un signal de sortie (C1) à partir du signal de comparateur masqué (Cm) et du signal de sortie (CA1) du premier comparateur (1512) pour le pilote (1221) de signal de réception.
